Europäisches Patentamt

(19) European Patent Office

Office européen des brevets

(11) EP 0 883 120 A1

(12) EUROPEAN PATENT APPLICATION

(43) Date of publication:
09.12.1998 Bulletin 1998/50

(51) Int. Cl.⁶: **G11B 15/62**, G11B 15/64, G11B 15/43, G11B 15/46

(21) Application number: 98100846.9

(22) Date of filing: 19.01.1998

(84) Designated Contracting States:
AT BE CH DE DK ES FI FR GB GR IE IT LI LU MC NL PT SE
Designated Extension States:
AL LT LV MK RO SI

(30) Priority: 05.06.1997 US 869834

(71) Applicant:
**Hewlett-Packard Company**
**Palo Alto, California 94304 (US)**

(72) Inventor: **Poorman, Paul W.**
**Meridian, Idaho 83642 (US)**

(74) Representative:
**Schoppe, Fritz, Dipl.-Ing.**
**Schoppe & Zimmermann**
**Patentanwälte**
**Postfach 71 08 67**
**81458 München (DE)**

(54) **Method for controlling tape contact pressure and head/tape spacing on a transducer head**

(57)     A system and method for controlling contact pressure and spacing between a tape (20) and a tape head (15) includes means for determining a tape speed of the tape (20) across the tape head (15) and means for controlling a tape tension of the tape (20) as a function of the tape speed. The function is either linear (100) or non-linear (105). However, a higher velocity will result in a higher tension and a lower velocity will result in a lower tension. The means for determining the tape speed is preferably a tape controller (25). The means for controlling the tape tension preferably includes first and second tape reels (30, 35) driven by first and second tape reel motors (40, 45). A first end of the tape (20) is attached to the first tape reel (30) and a second end of the tape (20) is attached to the second tape reel (35). The first tape reel motor (40) applies a torque to the first tape reel (30) pulling the tape (20) in a first direction. The second tape reel motor (45) applies a torque to the second tape reel (35) pulling the tape (20) in an opposite direction. A tension is created in the tape (20) as the tape (20) is pulled in opposite directions.

FIG. 1

**Description**

FIELD OF THE INVENTION

This invention relates, in general to, tape drive systems and, more particularly to, a system and method for controlling contact pressure between a magnetic tape and a tape drive transducer head.

BACKGROUND OF THE INVENTION

In tape recording devices, the pressure between the tape and transducer head is critical. If the contact pressure is too low, the tape will "fly" off of the head causing poor recording performance. If the contact pressure is too high, the tape will kink or tear.

It is typically desirable for the tape to remain in contact with the read/write head. Optimal recording performance is achieved with a minimum spacing between head and tape. A constant tension is typically applied to the tape to minimize the spacing between the head and the tape.

At high velocities, air is often pulled in between the head and tape causing a positive pressure air bearing. The positive pressure air bearing opposes the constant tape tension and separates the tape from the head causing the tape to fly. As tape speed increases, so does the force separating the tape from the head. As the head/tape spacing increases, recording performance degrades. Typical tape speed above 3 meters per second (m/s) causes tape flying and consequent poor recording performance.

Tape tension is often higher than necessary to keep the tape in contact with the head because the tape tension is constant and the force separating the tape from the head is variable. Since tape tension requires power dissipation to produce, unnecessary tape tension wastes power.

Prior attempts to reduce tape flying include providing transverse or longitudinal slots or gaps in the head. However, these slots or gaps often collect debris which can cause head or tape failure. Furthermore, machining or producing the gaps adds time and expense to the manufacturing process.

Additionally, a flat Tape Bearing Surface (TBS) has been developed that minimizes the velocity induced increase in head/tape spacing for single element heads. However, for some configurations of flat TBS heads, especially dual element styles, the maximum contact pressure can exceed 12 megapascal (MPa). Contact pressure in excess of 12 MPa can kink or shred tapes and must be avoided. Typically, the maximum contact pressure occurs at low velocities below one m/s.

Accordingly, given the forgoing backgrounds relating to tape recording devices and contact pressure, objects of the present invention are to provide a system and method for minimizing spacing between tape and head, reducing tape damage, and minimizing power dissipation.

SUMMARY OF THE INVENTION

According to principles of the present invention in a preferred embodiment, a system and method for controlling contact pressure between a tape and a tape head comprises means for determining a tape speed of the tape across the tape head and means for controlling a tape tension of the tape as a function of the tape speed. The function is either linear or non-linear. However, a higher velocity will result in a higher tension and a lower velocity will result in a lower tension.

According to further principles of the present invention in a preferred embodiment, the means for controlling the tape tension includes first and second tape reels driven by first and second tape reel motors. A first end of the tape is attached to the first tape reel and a second end of the tape is attached to the second tape reel. The first tape reel motor applies a torque to the first tape reel pulling the tape in a first direction. The second tape reel motor applies a torque to the second tape reel pulling the tape in an opposite direction. A tension is created in the tape as the tape is pulled in opposite directions.

Other objects, advantages, and capabilities of the present invention will become more apparent as the description proceeds.

DESCRIPTION OF THE DRAWINGS

Figure 1 is a block diagram of a dual element tape recording and playback system.

Figure 2 is an enlarged view of one of the elements shown in Figure 1.

Figure 3 is a graph of tape tension vs. tape velocity showing two example functions for controlling tape tension as a function of tape velocity.

DETAILED DESCRIPTION OF THE INVENTION

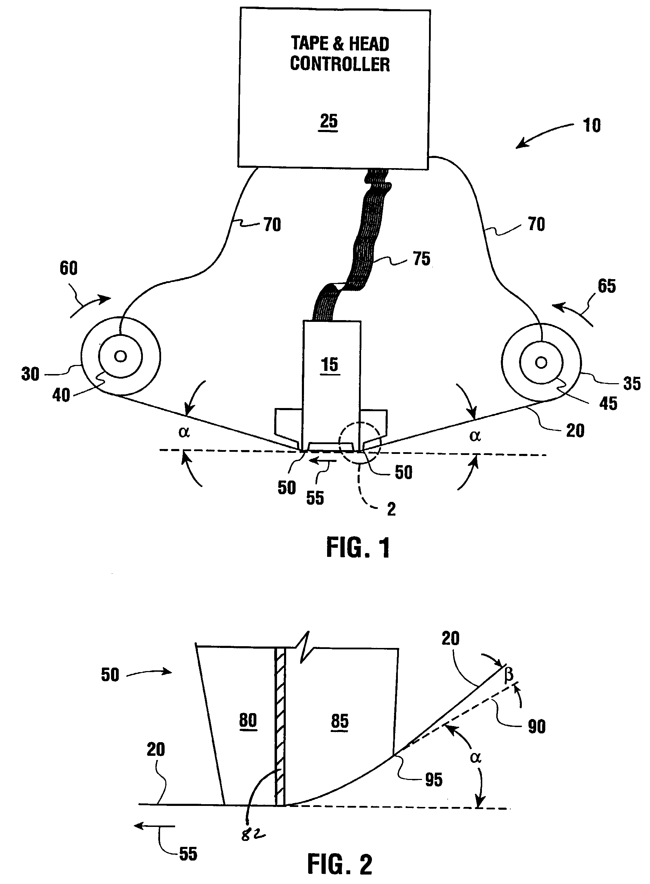

Figure 1 illustrates a tape recording and playback system 10. Tape recording and playback system 10 includes a tape head 15, a tape 20, a tape and head controller 25, two reels 30, 35, and two reel motors 40, 45. The illustrated tape head 15 includes two read/write tape head elements 50. Alternatively, tape head 15 includes any number of read/write tape head elements 50.

Tape 20 is attached at one end to reel 30 and at the other end to reel 35. Tape 20 is moved as reels 30 and 35 are driven by motors 40 and 45, respectively. Motors 40 and 45 are typically reversible, brushless D.C. motors.

Motors 40, 45 drive reels 30, 35 by applying torque to reels 30, 35, respectively. Tension in tape 20 is produced by applying a first torque to the reel which receives tape 20 and a lesser torque to the other reel. For example, if tape 20 is moving in the direction indicated by direction arrow 55, motor 40 provides a clockwise torque as shown by torque arrow 60 and motor 45 provides a counterclockwise torque as shown by torque arrow 65, thereby providing tension in tape 20. A typical tension is about one Newton (N) at motor speeds up to eight meters per second (m/s).

Motors 40, 45 produce torque proportional to current provided by tape and head controller 25. The current is transferred from tape and head controller 25 to motor 40, 45 through conductors 70. Tape and tape head controller 25 receives and sends data to head 15 via flex cable 75.

As tape 20 moves between reel 30 and reel 35, it passes across head 15. Tape head 15 includes two active read/write elements 50. When one element 50 is in read mode, the other element 50 is in write mode. Tape 20 travels in a direction so that the element 50 in read mode reads what has just been written by the element 50 in write mode.

Referring now to enlarged view Figure 2, each element 50 of tape head 15 is composed generally of two layers. One layer is composed of a hard refractory material 80 and thin film read/write elements 82. The other layer is a non-magnetic cover wafer 85, also typically composed of a hard refractory material.

Tape 20 is wrapped around element 50 at an angle $\alpha$. Angle $\alpha$ is typically about 14". Angle $\alpha$ includes overwrap angle $\beta$. Overwrap angle $\beta$ is the angle between the tape 20 and the tangent line 90 which represents the tangent to cover wafer 85 where tape 20 engages wafer edge 95. Angle $\beta$ is typically about 2".

Tape 20 is wrapped around element 50 so that tape 20 contacts element 50 as much as possible. However, as tape 20 moves in the direction indicated by direction arrow 55, air is pulled under tape 20 at wafer edge 95. At high speed, the air pulled under tape 20 causes tape 20 to separate from element 50. Typically, tape speeds in excess of 3 m/sec cause separation between tape 20 and element 50.

In a preferred embodiment of the present invention, tension in tape 20 is increased to compensate for the air pulled under tape 20. The increased tension in tape 20 reduces the separation between tape 20 and element 50.

Preferably, the tension In tape 20 is increased by controlling the torque applied by reel motors 40, 45. Alternatively, other methods of tape tension control are within the scope of the present invention. Other tape tension control methods include providing a braking mechanism to reels 30, 35 or tape 20.

The tape tension is controlled by tape and head controller 25 as a function of tape speed. Tape and head controller 25 determines a tape speed, then controls the tape tension as a function of the tape speed. Tape and head controller 25 determines the tape speed by either selecting a desired speed of tape 20 or monitoring the actual speed of tape 20.

Controlling tape tension as a function of tape speed is useful at all tape speeds. Matching the tape tension to the tension required to keep tape 20 in contact with head 15 minimizes power dissipation. A constant tape tension must always be high in order to provide the necessary contact pressure between tape 20 and head 15 at high tape speeds. Varying the tape tension as a function of tape speed allows lower tape tension at lower tape speeds. Lower tape tension requires less power dissipation.

Additionally, reducing the tape tension reduces contact pressure between tape 20 and head 15. The contact pressure is reduced at low speeds to prevent kinking and shredding of tape 20. Reducing tension at low speed is particularly desirable for flat Tape Bearing Surface (TBS) tape heads because flat TBS heads have an especially high contact pressure at low speeds. Preferably the tension is reduced to less than 0.1 N for tape speed less than 1 m/s.

While recording is possible at tape velocities below 1 m/s, high speed, linear tape computer backup devices rarely use a tape velocity below 1 m/s. Such low tape velocities typically occur only as the tape stops or when the tape reverses direction. Since speeds below 1 m/s are not typically used for recording, recording quality is not affected by a reduced tape tension at low speeds.

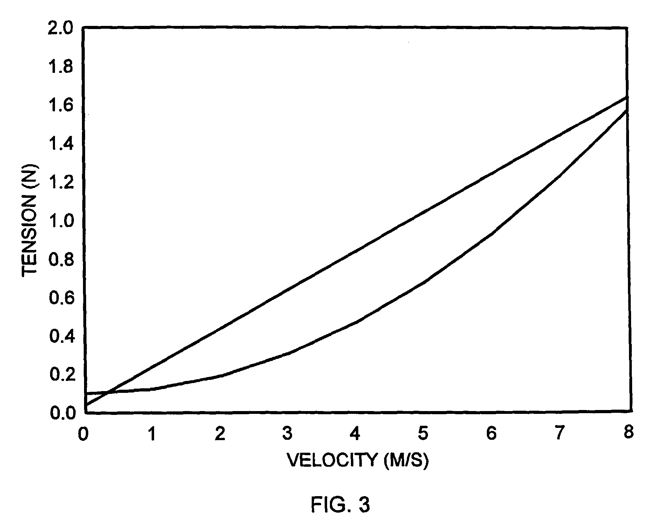

Figure 3 shows two examples of tape tension as a function of tape speed. Functions 100, 105 are preferably generated by software within tape and head controller 25 or alternatively at other locations within the tape recording and playback system 10.

Linear equation 100 is a preferred equation for controlling tape tension as a function of tape speed. An equation for linear function 100 is $T = kv + c$ where tension T varies as a function of constant k times velocity v plus a zero speed constant c. Zero speed constant c is the resulting tension in tape 20 where tape speed is zero. For example, if $c = 0.04$ and $k = 0.2$, the tension at 0.5 m/sec is 0.14 N, and at eight m/sec, the tension is 1.64 N.

Alternatively, nonlinear functions are also used to control tape tension as a function of tape speed. One example of a nonlinear function 105 is $T = kv^n + d$. Tension T varies as a function of constant k times velocity v to the n power plus a zero speed constant d, where n is a positive value not equal to zero or one. Zero speed constant d is the resulting tension in tape 20 where tape speed is zero. Figure 3 illustrates T as a function 105 of velocity where $n = 2$.

In summary, what has been described above are the preferred embodiments for a system and method for controlling contact pressure between a tape and a tape head. While the present invention has been described by reference to specific embodiments, it will be obvious that other alternative embodiments and methods of implementation or modification may be employed without departing from the true spirit and scope of the invention.

**Claims**

1. A system for controlling contact pressure and spacing between a tape (20) and a tape head (15), the system comprising:

   (a) means for determining a tape speed of the tape (20) across the tape head (15); and,
   (b) means for controlling a tape tension of the tape (20) as a function of the tape speed.

2. The system of claim 1 wherein said means for determining the tape speed includes a tape controller (25).

3. The system of claim 1 wherein said means for controlling the tape tension includes:

   (a) a first tape reel (30) rotatable about a first axis;
   (b) a second tape reel (35) rotatable about a second axis, the tape (20) attached to each of said first and second tape reels (30, 35);
   (c) means for providing a first torque to said first tape reel (30) about said first axis; and,
   (d) means for providing a second torque to said second tape reel (35) about said second axis, wherein said second torque opposes said first torque, thereby causing tension in the tape (20).

4. The system of claim 3 wherein said means for providing the first torque and said means for providing the second torque includes first and second reel drive motors (40, 45), said first reel drive motor (40) mechanically coupled to said first tape reel (30), said second reel drive motor (45) mechanically coupled to said second tape reel (35), wherein said first reel drive motor (40) provides the first torque to said first reel (30) and said second reel drive motor (45) provides the second torque to said second reel (35).

5. The system of claim 1 wherein the function of the tape speed is a linear function (100) of the tape speed.

6. A method for controlling contact pressure and spacing between a tape (20) and a tape head (15), the method comprising the steps of:

   (a) determining a tape speed of the tape (20) across the tape head (15); and,
   (b) controlling a tape tension of the tape (20) as a function of the tape speed.

7. The method of claim 6 wherein said step of controlling the tape tension includes:

   (a) providing a first tape reel (30) rotatable about a first axis;
   (b) providing a second tape reel (35) rotatable about a second axis
   (c) attaching the tape (20) to each of said first and second tape reels (30, 35);
   (d) providing a first torque to said first tape reel (30) about said first axis; and,
   (e) providing a second torque to said second tape reel (35) about said second axis, wherein said second torque opposes said first torque, thereby causing tension in the tape (20).

8. The method of claim 6 wherein the function of the tape speed is a linear function (100) of the tape speed.

9. The method of claim 6 wherein the function of the tape speed is a nonlinear function (105) of the tape speed.

10. The method of claim 6 wherein the tape tension is increased as the tape speed increases and the tape tension is decreased as the tape speed decreases.

TAPE & HEAD
CONTROLLER

25

10

70

70

60

65

30

35

40

45

15

20

α

α

50

50

50

55

2

**FIG. 1**

50

20

β

90

80

85

20

α

95

55

82

**FIG. 2**

FIG. 3

**European Patent Office**

**EUROPEAN SEARCH REPORT**

Application Number

EP 98 10 0846

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 628 375 A (STADLMANN WILFRIED) 9 December 1986 | 1-4,6,7,9 | G11B15/62 |
| A | * abstract; figures 1,2 * <br> * column 5, line 65 - column 7, line 49 * | 5,8,10 | G11B15/64 <br> G11B15/43 <br> G11B15/46 |
| X | WO 82 01272 A (SPIN PHYSICS INC) 15 April 1982 <br> * abstract; figures 2,3 * <br> * page 2, line 10 - page 7, line 13 * | 1,2,5,6,8,10 | |
| A | US 5 307 227 A (OKADA HIDEO ET AL) 26 April 1994 <br> * abstract; figures 1-6 * <br> * column 5, line 16 - column 7, line 57 * | 1-10 | |
| A | US 5 202 807 A (OKADA HIDEO ET AL) 13 April 1993 <br> * abstract; figures 1-4,6,7 * <br> * column 4, line 35 - column 5, line 4 * <br> * column 6, line 3 - line 60 * | 1-10 | |
| A | US 5 012 989 A (WHYTE JR ROBERT E ET AL) 7 May 1991 <br> * abstract; figures 1,2 * <br> * column 3, line 7 - column 4, line 17 * | 1-10 | TECHNICAL FIELDS SEARCHED (Int.Cl.6) <br><br> G11B |
| A | US 4 256 996 A (BROOKS STEVEN W ET AL) 17 March 1981 <br> * abstract; figures 1-4 * <br> * column 2, line 8 - column 4, line 36 * | 1-10 | |

The present search report has been drawn up for all claims

| Place of search | Date of completion of the search | Examiner |
|---|---|---|
| THE HAGUE | 30 June 1998 | Pariset, N |

EPO FORM 1503 03.82 (P04C01)